# EUROPEAN PATENT SPECIFICATION

(11) **EP 3 553 218 B1**
(45) Date of publication and mention of the grant of the patent: **18.11.2020**
(21) Application number: 19169187.2
(22) Date of filing: 29.07.2013
(51) Int. Cl.: D06F 37/20, F16F 7/09

(54) **LAUNDRY PROCESSING MACHINE**
WÄSCHEBEHANDLUNGSMASCHINE
MACHINE DE TRAITEMENT DU LINGE

(30) Priority: 30.07.2012 KR 20120083383; 30.07.2012 KR 20120083384
(43) Date of publication of application: 16.10.2019
(62) Divisional of application: 13178371.4
(73) Proprietor: LG Electronics Inc., Seoul 07336 (KR)
(72) Inventor: KIM, Keunjoo, Seoul 153-023 (KR); PARK, Seungchul, Seoul 153-023 (KR)
(74) Representative: Vossius & Partner Patentanwälte Rechtsanwälte mbB

(56) References cited:
- EP-A1- 0 555 707
- EP-A1- 2 090 687
- EP-A1- 2 692 931
- WO-A1-2011/141770
- US-A1- 2006 011 429
- US-A1- 2011 113 832

## Description

The present invention relates to a laundry processing machine.

A laundry processing machine includes an outer tub arranged in and supported by a fixing body such as a casing or a body, and an inner tub arranged in the outer tub to accommodate laundry and rotate. The laundry processing machine performs the operations of washing, rinsing and drying.

The laundry processing machine is generally provided with a suspension to attenuate vibration of the outer tub caused by rotation of the inner tub. The suspension functions to absorb vibrational energy to damp vibration. However, the conventional suspension simply absorbs vibrational energy, but fails to differently respond according to different characteristics of vibration. For example, during operation of the laundry processing machine, when rotation of the inner tub in a transient state before reaching a steady state, larger vibration occurs than in the steady state. Accordingly, a means to produce shock absorption force or vibration damping force is needed in this state. On the other hand, in the steady state, it is preferable to allow the outer tub to naturally vibrate to maintain the steady state rather than to change the stabilized vibration system.

However, conventionally, a suspension has been designed merely in view of how to attenuate vibration in a vibration section in which the outer tub severely vibrates, e.g., the transient vibration section, but not in consideration of vibration in the steady state. Particularly, with the conventional suspension, most of the vibration of the outer tub in the steady state is transferred to surrounding constituents such as the cabinet. As a result, the floor on which the laundry processing machine is installed vibrates and excessive noise is produced due to vibration of the laundry processing machine.

EP 0 555 707 A1 discloses a friction damper for machine having at least one braking body, which, in the damping position, rests under a spring force against a housing. EP 2 090 687 A1 discloses a friction damper for providing a coupling between a framework and a basket of washing machine. US 2011/113832 A1 discloses a washing machine containing a friction damper device for a washing unit.

Therefore, the present invention has been made in view of the above problems, and it is an object of the present invention to provide a laundry processing machine which is capable of actively controlling damping force in response to the amount of vibration of the outer tub.

The invention is defined by the appended independent claim, and preferred aspects of the invention are defined by the appended dependent claims. In accordance with an aspect of the disclosure in the present description, the above and other objects can be accomplished by the provision of a laundry processing machine including a casing, an outer tub supported in the casing, an inner tub rotatably provided in the outer tub, and a shock absorber coupled, at one end thereof, to the casing and coupled, at the other end thereof, to the outer tub to absorb vibration of the outer tub caused by rotation of the inner

The shock absorber includes a cylinder connected to one of the casing and the outer tub, a piston connected to the other one of the casing and the outer tub, wherein the cylinder and the piston make relative movement with respect to each other according to movement of the outer tub, a friction member provided to form friction with the piston, a friction member holder to integrally move together with the friction member, and a holder operating member to apply pressure to the friction member holder to cause the friction member to contact the piston when the holder operating member is at a first operational position and to release the pressure applied to the friction member holder to allow the friction member to be separated from the piston when the holder operating member is at a second operational position.

When the holder operating member is at the first operational position, the pressure may be applied to an outer lateral surface of the friction member holder, and an inner lateral surface of the friction member holder may contact the piston.

The holder operating member of the laundry processing machine in accordance with the invention comprises a cam forming portion protruding from an inner circumferential surface facing the friction member holder and extending along a circumferential direction. The cam forming portion comprises a pressing section to apply pressure to the friction member holder to allow the friction member to closely contact the piston, when the holder operating member is at the first operational position, and a spacing section to form a gap between the spacing section and the piston to allow the friction member holder separated from the piston to move, when the holder operating member is at the second operational position.

A distance between the pressing section and the piston may be shorter than a distance between the spacing section and the piston.

The pressing section may be formed as a straight line, and the spacing section may be formed to have a predetermined radius of curvature, the cam forming portion may further comprise a connection section formed between the pressing section and the spacing section to have a larger radius of curvature than the spacing section.

A radius of curvature of the inner lateral surface of the friction member holder may be larger than a radius of curvature of the outer circumferential surface of the piston.

When the holder operating member is at the first operational position, a distance from a side end of the inner lateral surface of the friction member holder to the piston may be longer than a distance from a center of the inner lateral surface of the friction member holder to the piston.

The above and other objects, features and other advantages of the present invention will be more clearly understood from the following detailed description taken in conjunction with the accompanying drawings, in which:
FIG. 1 is a cross-sectional view showing a laundry processing machine according to an example not forming part of the present invention;
FIG. 2 is a perspective view showing a shock absorber shown in FIG. 1;
FIG. 3 is a cutaway view showing the inner part of the shock absorber of FIG. 2;
FIG. 4 is an enlarged view showing a portion of the shock absorber of FIG. 2;
FIG. 5A is a perspective view showing a slide member guide;
FIG. 5B is a front view showing the slide member guide of FIG. 5A;
FIG. 6 is a front view showing a slide member;
FIG. 7 is a cutaway view showing the shock absorber, with the slide member guide placed at a first rotational position;
FIG. 8 is a cutaway view showing the shock absorber, with the slide member guide placed at a second rotational position;
FIG. 9 is a block diagram illustrating control relationship between constituents that operate a shock absorber according to one embodiment;
FIG. 10 is a cutaway view showing a cylinder;
FIG. 11 is a view showing another embodiment of the slide member;
FIG. 12 is a perspective view showing a shock absorber according to an embodiment of the present invention;
FIG. 13 is a cutaway view showing the shock absorber of FIG. 12;
FIG. 14 shows a piston support disposed in the cylinder;
FIG. 15 is a view illustrating operation of the shock absorber, which is at a first operational position;
FIG. 16 is a view illustrating operation of the shock absorber, which is at a second operational position;
FIG. 17 is a perspective view showing a holder operating member;
FIG. 18 is a view showing a cam forming portion formed in the holder operating member;
FIG. 19 is a view showing a shock absorber according to another example not forming part of the present invention, a holder operating member of which is at the second operational position (FIG. 19(a)) or at the first operational position (FIG. 19(b)); and
FIG. 20 is a view showing a shock absorber according to another example not forming part of the present invention, a holder operating member of which is at the second operational position (FIG. 20(a) or at the first operational position (FIG. 20(b)).

Wherever possible, the same reference numbers will be used throughout the drawings to refer to the same or like parts.

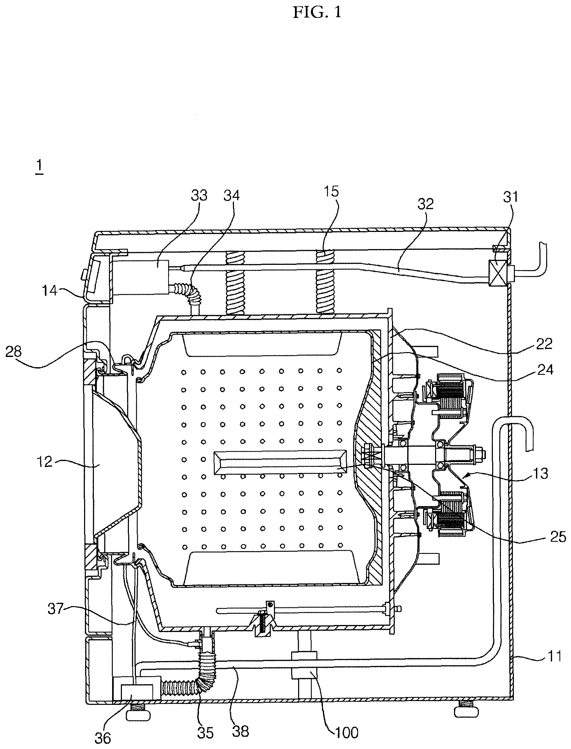

FIG. 1 is a cross-sectional view showing a laundry processing machine according to an exemplary embodiment of the present invention. Referring to FIG. 1, the laundry processing machine 1 includes a casing 11 forming an external appearance of the laundry processing machine and provided with a laundry entrance hole allowing insertion or retrieval of laundry, a door 12 rotatably installed at the casing 11 to open and close the laundry entrance hole, an outer tub 22 disposed in the casing 11, an inner tub 24 rotatably arranged in the outer tub 22 to accommodate laundry therein, a driving unit 13 to provide driving force for rotation of the inner tub 24, a detergent box (not shown) to accommodate detergent to be introduced into the outer tub 22, and a control panel 14 provided with input keys to receive various input control commands from a user and a display to display the operation state of the laundry processing machine.

The outer tub 22 is supported by a shock absorber in the casing 11. The shock absorber is a device to absorb vibrational energy. Examples of the shock absorber include a spring which is elastically deformed according to vibration of a vibrating body and returned to original state when external force is removed, and a damper which produces a predetermined resistance or damping force against periodic vibration of a vibrating body to hasten disappearance of the periodic vibration. Particularly, the shock absorber can actively provide damping force in response to vibration of the outer tub 22.

In the laundry processing machine 1 of this embodiment, shock may be absorbed not only by the shock absorber 100, but also by the spring 15. The spring 15 is deformable according to displacement of the upper end of the outer tub 22. In a broad sense, the spring 15 is a type of shock absorber. However, the term 'spring' is employed to distinguish the spring 15 from the shock absorber 100.

The inner tub 24 is rotated by the driving unit 13. The inner tub 24 is provided with a plurality of through holes to allow washing water to flow between the inner tub 24 and the outer tub 22. The inner wall of the inner tub 24 may be provided with a lifter 25 to lift the laundry to a certain height when the inner tub 24 rotates.

The inner tub 24 may be driven in an indirect driving manner of transferring driving force produced by the driving unit 13 to the inner tub 24 via a power transmission means such as a belt or a pulley. In this embodiment, however, a direct driving manner is adopted in which the driving shaft of the driving unit 13 is coaxially aligned with the center of rotation of the inner tub 24, and a rotor of the driving unit 13 and the inner tub 24 integrally rotate. Particularly, in the direct driving manner, the driving unit 13 may include a motor capable of controlling the rotational speed of the inner tub 24 as well as rotating the inner tub 24 in the forward/rearward directions.

The gasket 28 seals the gap between the outer tub 22 and the casing 11. The gasket 28 is disposed between an opening at the front the outer tub 22 and the laundry entrance hole of the casing 11. The gasket 28 is formed of an elastically deformable material. The gasket 28 relieves shock transferred to the door 12 by being folded during rotation of the inner tub 24 and at the same time prevents the washing water in the outer tub 22 from leaking outward. The gasket 28 may be provided with a nozzle (not shown) to spray washing water into the inner tub 24.

In addition, the laundry processing machine 1 may include a water supply valve 31 to regulate inflow of washing water from an external water source, and a water supply channel 32 through which washing water introduced via the water supply valve 31 flows.

The detergent box accommodates an additive for washing such as a detergent for washing, a fabric softener, or a bleaching agent. The detergent box may be arranged at the front of the casing 11 so as to be retractable from the casing 11. A housing 33 to accommodate the detergent box may be provided in the casing 11. The washing water supplied through the water supply channel 32 is mixed with the detergent while passing through the detergent box in the detergent box the housing 33 and supplied into the outer tub 22 via a water supply bellows 34.

The laundry processing machine 1 may further include a drainage bellows 35 to discharge washing water from the outer tub 22, a pump 36 to forcibly transport the washing water along the drainage bellows 35, and a drainage channel 38 to guide discharge of the washing water forcibly transported by the pump 36 to the outside. Depending on embodiments, the washing water in the outer tub 22 may be forcibly transported to the nozzle by operation of the pump 36. In this case, a circulation channel 37 may be provided to connect the pump 36 to the nozzle.

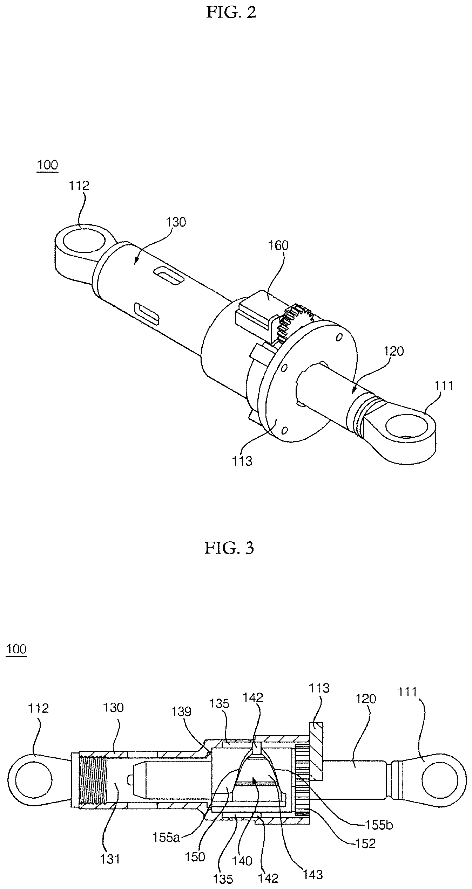

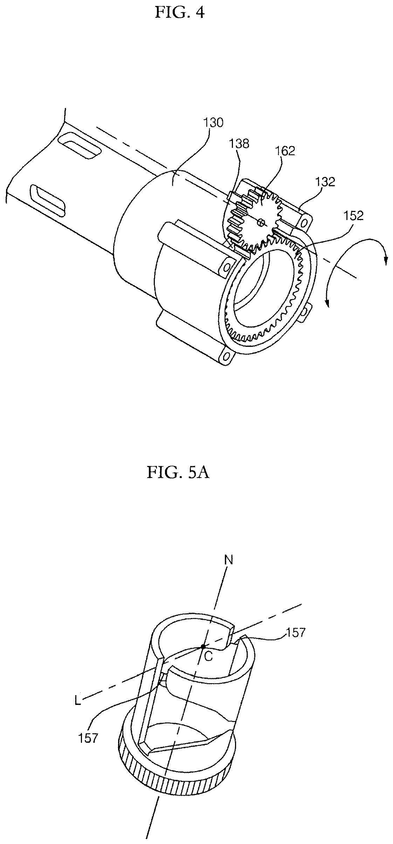

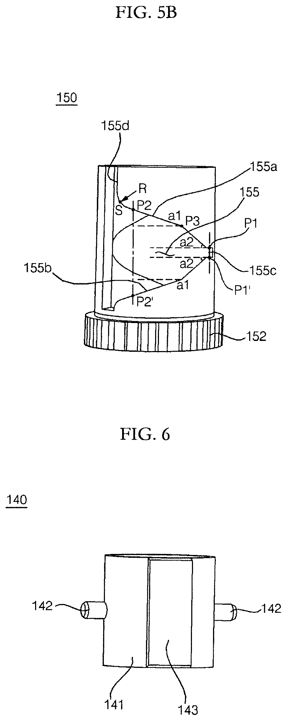

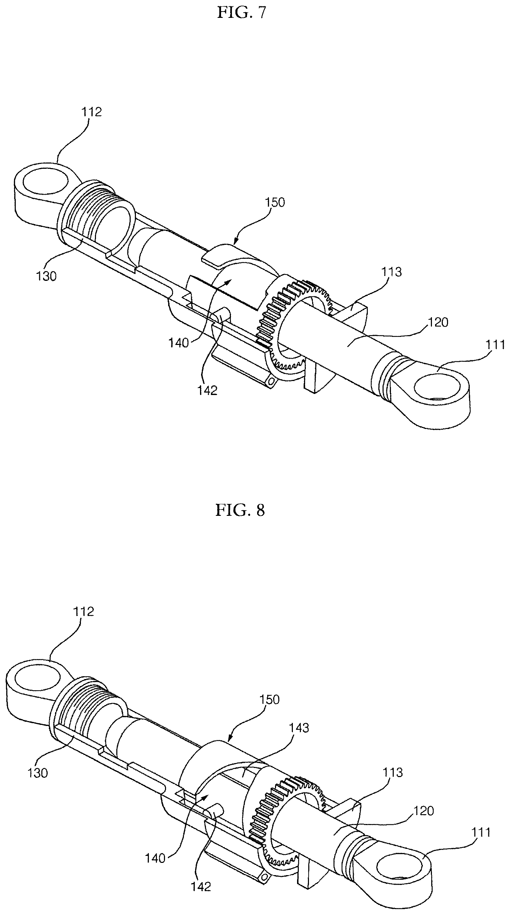

FIG. 2 is a perspective view showing a shock absorber shown in FIG. 1. FIG. 3 is a cutaway view showing the inner part of the shock absorber of FIG. 2. FIG. 4 is an enlarged view showing a portion of the shock absorber of FIG. 2. FIG. 5A is a perspective view showing a slide member guide. FIG. 5B is a front view showing the slide member guide of FIG. 5A. FIG. 6 is a front view showing a slide member. FIG. 7 is a cutaway view showing the shock absorber, with the slide member guide placed at a first rotational position. FIG. 8 is a cutaway view showing the shock absorber, with the slide member guide placed at a second rotational position.

Referring to FIGS. 2 to 8, the shock absorber 100 includes a piston 120, a cylinder 130, a slide member 140, and a slide member guide 150.

The piston 120 is connected to one of the casing 11 and the outer tub 22 and is inserted into the cylinder 130. The cylinder 130 is connected to the other one of the casing 11 and the outer tub 22. When the outer tub 22 vibrates, the piston 120 and the cylinder 130 make relative movements with respect to each other. That is, when the outer tub 22 vibrates, the piston 120 and the cylinder 130 have displacements with respect to each other. In this embodiment, the cylinder 130 is connected to the outer tub 22 and is moved according to vibration of the outer tub 22. On the other hand, the piston 120 is connected to the casing 11 and fixed. The shock absorber 100 may be provided with a piston connection portion 111 to connect the piston 120 to the casing 11, and a cylinder connection portion 112 to connect the cylinder 130 to the outer tub 22.

The shock absorber 100 may further include a shock absorption control motor 173. The shock absorption control motor 173 provides driving force to rotate the slide member guide 150, which will be described later. For example, The shock absorption control motor 173 may include a direct current (DC) motor which produces torque between about 300 g · cm and 2,500 g · cm. Driving force from the shock absorption control motor 173 may be transferred to the slide member guide 150 by at least one driving gear 162, which will be described later. A driven gear 152 to engage with a driving gear 162 may be formed at the slide member guide 150. In this embodiment, the driven gear 152 is a spur gear having a plurality of gear teeth arranged along the outer circumferential surface of the slide member guide 150 in a circumferential. Embodiments of this example are not limited thereto. The driven gear 152 may be realized in various shapes so long as it can receive power from the driving gear 162.

The slide member guide 150 is interposed between the cylinder 130 and the slide member 140, is driven by the shock absorption control motor 173 to rotate between the first rotational position (see FIG. 7) and the second rotational position (see FIG. 8). When the slide member guide 150 moves according to vibration of the outer tub 22, the slide member guide 150 has a larger displacement at the second rotational position with respect to the slide member 140 than at the first rotational position. Herein, the displacement is defined with reference to the relative position of the slide member guide 150 with respect to the slide member 140. The slide member guide 150 may be formed of polytetrafluoroethylene.

The slide member 140 is formed to have a hollow shape to allow the piston 120 to be inserted thereinto. Thereby, friction occurs between the inner circumferential surface of the slide member 140 forming the hollow part and the outer circumferential surface of the piston 120.

The slide member 140 may include a protrusion 142 protruding from the outer circumferential surface 141 of the slide member 140 (see FIG. 6). A pair of protrusions 142 may be provided at the opposite positions. A movement groove 135 may be formed inside the cylinder 130. The protrusions 142 move, thereby being inserted into the movement groove 135. The movement groove 135 extends in the longitudinal direction of the cylinder 130 to allow the protrusions 142 to move within a certain range when the slide member 140 moves in response to vibration of the outer tub 22. A pair of movement grooves 135 may be provided on both sides of cylinder 130 to correspond to the number of the protrusions 142.

The movement groove 135 may be formed to have a width corresponding to that of the protrusion 142. In this case, the protrusions 142 are allowed to move in the longitudinal direction of the movement groove 135 within a certain range, but circumferential movement of the protrusions 142, i.e., rotational movement of the slide member 140 about the piston 120 is restricted.

Referring to FIGS. 5A and 5B, the slide member guide 150 includes an open-cut portion 155 formed to surround the outer side of the slide member 140 and to be cut open to allow the protrusions 142 to be disposed therethrough. Accordingly, movement of the protrusions 142 according to movement of the slide member 140 mainly occurs in a space limited by the open-cut portion 155.

The open-cut portion 155 extends in the circumferential direction of the slide member guide 150. The open-cut portion 155 includes a first boundary 155a and a second boundary 155b arranged on both sides of the protrusion 142. The first boundary 155a moves the protrusion 142 in one direction (e.g., downward) according to vibration of the outer tub 22, and the second boundary 155b moves the protrusion 142 in the opposite direction (e.g., upward). The distance between the first boundary 155a and the second boundary 155b may vary along the circumferential direction. In the case that the amount of vibration of the outer tub 22 is small, the displacement of the slide member guide 150 is also small. Therefore, collision between the protrusion 142 and the first boundary 155a or second boundary 155b may not occur. In this case, only the slide member guide 150 needs to move, with the slide member 140 fixed. To this end, the friction between the slide member guide 150 and the slide member 140 is preferably smaller than the friction between the slide member 140 and the piston 120.

Meanwhile, the slide member 140 is moved by the slide member guide 150 which moves together with the cylinder 130 according to vibration of the outer tub 22. Depending on the distance between the first boundary 155a and the second boundary 155b contacting the protrusion 142 at each rotational position, the maximum allowed value of relative displacement of the slide member guide 150 with respect to the protrusion 142 is determined.

Hereinafter, the relative displacement of the protrusion 142 is defined with reference to the relative position of the protrusion 142 (or the slide member 140) with respect to the slide member guide 150 when a relative displacement is produced between the slide member 140 and the slide member guide 150 according to vibration of the outer tub 22. According to this definition, the relative displacement of the protrusion 142 allowed at the second rotational position is greater than the relative displacement allowed at the first rotational position. In the case that the protrusion 142 is restricted by the slide member guide 150 at the first rotational position, the relative displacement of the slide member guide 150 with respect to the protrusion 142 is 0.

When the slide member guide 150 reciprocates according to vibration of the outer tub 22, the distance between the point P2 at which the protrusion 142 and the first boundary 155a meet at the second rotational position and the point P2' at which the protrusion 142 and the second boundary 155b meet at the second rotational position is greater than the distance between the point P1 at which the protrusion 142 and the first boundary 155a meet at the first rotational position and the point P1' at which the protrusion 142 and the second boundary 155b meet at the first rotational position. In this embodiment, movement of the protrusion 142 is restricted by a restriction groove 155c at the first rotational position. The first rotational position is not limited thereto. the first rotational position and the second rotational position are defined as a relative relationship between the first rotational position and the second rotational position throughout this specification. Accordingly, any rotational position can be taken as the first rotational position so long as the maximum allowable relative displacement of the slide member guide 150 with respect to the slide member 140 is smaller than the maximum allowable relative displacement at the second rotational position. The maximum allowable relative displacement substantially includes the value of 0.

The open-cut portion 155 may be provided with a protrusion insert path 157 to allow the protrusion 142 to be inserted into or removed from the protrusion insert path 157 when the slide member 140 and the slide member guide 150 are coupled or decoupled. Both sides of the protrusion insert path 157 is spaced a predetermined distance from each other to allow the protrusion 142 to be inserted thereinto. One of the both sides, i.e., the insert path boundary 155d extends from the first boundary 155a.

Meanwhile, the first boundary 155a or the second boundary 155b may include adjoining sections having different slopes. The sections extending from the protrusion insert path 157 to the restriction groove 155c along the first boundary 155a may include a transition point P3 therebetween at which the slope of a tangent line changes. The slope may change from a first slope a1 to the second slope a2 at the transition point P3 (a1<a2). When the protrusion 142 is displaced from the restriction groove 155c, if the rotational position changes from the first rotational position to the second rotational position, the protrusion 142 does not directly enter the section with the first slope a1, but the protrusion 142 passes a section with the second slope a2, in which the amount of displacement of the protrusion 142 is smaller than in the section with the slop a1. Therefore, the amount of displacement of the protrusion 142 may be restricted within a proper range at the initial stage of change in rotational position such that the displacement of the protrusion 142 does not abruptly increase, and accordingly, shock produced by collision between the protrusion 142 and the open-cut portion 155 may be relieved and accompanying noise may be reduced.

The insert path boundary 155d and the first boundary 155a both form the boundary of the open-cut portion 155, and need to be distinguished from each other. The insert path boundary 155d and the first boundary 155a may be defined as follows. That is, during vibration of the outer tub 22, when the slide member guide 150 is gradually rotated such that the slide member guide 150 moves from the first rotational position to the second rotational position, the displacement of the protrusion 142 is limited within the first boundary 155a and the second boundary 155b, within a certain range of angle of rotation. However, when the slide member guide 150 continues to rotate, collision between the protrusion 142 and the first boundary 155a begins to stop from a certain moment. The first boundary 155a and the insert path boundary 155d may be divided by this time. If the displacement of the slide member 140 is not restricted when the protrusion 142 positioned on the protrusion insert path 157 is pushed upward by the second boundary 155b, the protrusion 142 may be derailed through the protrusion insert path 157 during subsequent descent of the slide member guide 150. To prevent this event from occurring, the cylinder 130 may be provided with a structure to collide with the upper end of the slide member 140 to restrict movement of the protrusion 142 in the protrusion insert path 157. In this case, one section of the first boundary 155a corresponding to the section in which the displacement of the protrusion 142 is restricted by collision between the cylinder 130 and the slide member 140 may be defined as the insert path boundary 155d. In consideration of collision with the protrusion 142, it is preferable that the slope of a tangential line continuously changes from the insert path boundary 155d to the first boundary 155a. FIG. 5B illustrates formation of a section having a radius of curvature R between the insert path boundary 155d and the first boundary 155a.

Referring to FIG. 4, the shock absorber 100 may include at least one gear to transfer driving force of the shock absorption control motor 173 to allow rotation of the slide member 140. The at least one gear may include a driving gear 162 rotated by the shock absorption control motor 173, and a driven gear 152 formed along the outer circumferential surface of the slide member guide 150 to rotate in response to rotation of the driving gear 162. The gear ratio between the driving gear 162 and the driven gear 152 may be 2:1. This means that the driven gear 152 completes one rotation when the driving gear 162 completes two rotations. In this embodiment, the driving gear 162 rotates at the same rotational speed (rpm) as that of the shock absorption control motor 173, and the driven gear 152 rotates at the same rotational speed (rpm) as that of the slide member guide 150. Depending on embodiments, however, a power transmission means such as a gear may be provided between the driving gear 162 and the driven gear 152.

The cylinder 130 may be provided with a gear exposure opening 138 such that the driven gear 152 formed at the slide member guide 150 is exposed outside of the cylinder 130. In this case, a portion of the driven gear 152 exposed to the outside through the gear exposure opening 138 engages with the driving gear 162.

One end of the cylinder 130 needs to be open wide enough to allow the slide member 140 and the slide member guide 150 to be easily inserted into the cylinder 130. After constituents including the slide member 140 are installed in the cylinder 130, a cylinder cap 113 may be coupled to the one end of the cylinder 130. An insert hole is formed at the center of the cylinder cap 113 to allow insertion of the piston 120. FIGS. 7 and 8 show the cylinder 130, in which a part of the cylinder cap 113 is cut away such that other constituent in the cylinder 130 is clearly visible. The piston 120 may be provided with a fastening portion 132 allowing a fastening member such as a screw, a bolt or a pin to be inserted thereinto to be coupled to the cylinder cap 113. The fastening member may penetrate the fastening portion 132 to be fastened to the cylinder cap 113.

Referring to FIG. 5A, 5B and 6, a pair of protrusions 142 may be symmetrically formed on the slide member guide 150, and two open-cut portions 155 corresponding to the protrusions 142 may be formed on the slide member guide 150. The open-cut portions 155 are symmetrically disposed with respect to the center C (see FIG. 5A) positioned on the axial line of rotation N of the slide member guide 150. Particularly, the inlets of the protrusion insert path 157 may be disposed on the straight line L passing the center C.

The slide member 140 may include a frictional contact surface 143 partially protruding along the outer circumferential surface 141 to maintain contact with the inner circumferential surface of the slide member guide 150. In this case, friction between the slide member 140 and the slide member guide 150 is caused only by the frictional contact surface 143. This structure allows the slide member 140 to be stably supported in the slide member guide 150 without shaking and limits friction occurring between the slide member 140 and the slide member guide 150 to below a certain level. Accordingly, when the slide member guide 150 is at the second rotational position, the slide member 140 can move relatively freely in the slide member guide 150. The frictional contact surface 143 may be formed on both sides of the outer circumferential surface of the slide member 140, and preferably be symmetrically disposed such that the slide member 140 is stably supported.

Particularly, the first boundary 155a and the second boundary 155b are preferably positioned on the frictional contact surface 143 at any rotational position of the slide member guide 150. In this case, the length of the frictional contact surface 143 is greater than the distance between the first boundary 155a and the second boundary 155b, and therefore the frictional contact surface 143 and the slide member guide 150 can be kept in contact with each other.

FIG. 7 is a cutaway view showing the shock absorber, with the slide member guide placed at a first rotational position. FIG. 8 is a cutaway view showing the shock absorber, with the slide member guide placed at a second rotational position. Hereinafter, operation of the shock absorber 100 according to vibration of the outer tub 22 will be described with reference to FIGS. 7 and 8.

In this example, the rotational position of the slide member guide 150 can be controlled according to the amount of vibration of the outer tub 22. Regarding control of vibration of an object which exhibits periodic movement, it is widely known that the vibrational energy of the object needs to be absorbed by damping the vibration in a vibration range within which the amount of vibration is large, and a degree of freedom of the object to keep the steady state is preferably secured when the movement of the object reaches the steady state and the amount of vibration is within an allowed range. The first rotational position is a position at which rotation of the slide member guide 150 is controlled to damp the vibration of the outer tub 22 in the case that vibration of the outer tub 22 increases to a large extent. At the first rotational position, the protrusion 142 may be inserted into the restriction groove 155c. In this case, the slide member guide 150 and the slide member 140 are integrally moved, and the vibration is damped by the friction between the slide member 140 and the piston 120.

On the other hand, the second rotational position is a position at which rotation of the slide member guide 150 is controlled such that the slide member guide 150 can be freely moved compared to the movement of the slide member guide 150 at the first rotational position. In the case that vibration of the outer tub 22 is very low as in the steady state, the slide member 140 is fixed and the slide member guide 150 is allowed to move. At the second rotational position, the slide member 140 may be moved by the slide member guide 150 depending on the amount of vibration of the outer tub 22. In this case, due to the distance between the first boundary 155a and the second boundary 155b (for example, the distance between P2 and P2' in FIG. 6), reciprocation of the slide member guide 150 may be performed without interference with the protrusion 142 in the majority of the corresponding section.

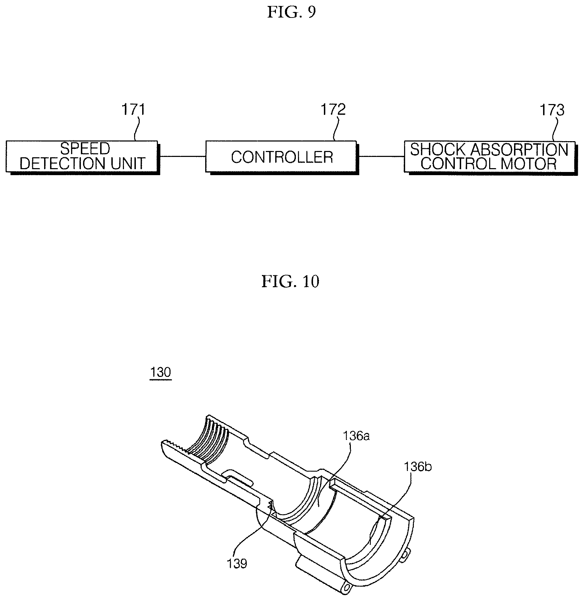

FIG. 9 is a block diagram illustrating a control relationship between constituents that operate a shock absorber according to one embodiment. Referring to FIG. 9, in a vibration section in which the level of vibration of the outer tub 22 becomes equal to or higher than a certain level during rotation of the inner tub 24, the slide member guide 150 is controlled to move to the first rotational position such that the vibration is absorbed by friction acting between the slide member 140 and the piston 120. On the other hand, in the case that the level of vibration of the outer tub 22 is less than a certain level, the slide member guide 150 is controlled to move to the second rotational position to allow the slide member guide 150 to relatively freely move. At this time, the rotational positions of the slide member guide 150 may be switched though control of the shock absorption control motor 173 by a controller 172.

During switching of the slide member guide 150 between the first rotational position and the second rotational position, the slide member guide 150 moves together with the cylinder 130 according to vibration of the outer tub 22. Thereby, the slide member 140 also moves together. At this time, downward movement of the slide member 140 is formed by the first boundary 155a, and upward movement of the slide member 140 is formed by the second boundary 155b.

Depending on embodiments, a vibration sensing unit (not shown) to measure the amount of vibration of the outer tub 22 may be further provided. For example, the vibration sensing unit may be realized as an output sensor to sense change in output power of the driving unit 13 according to rotation of the inner tub 24, or as a displacement sensor to measure displacement of the outer tub 22 according to vibration. In addition, in some embodiments, a speed detection unit 171 to detect change in rotational speed of the inner tub 24 may be further provided. The controller 172 controls operation of the shock absorption control motor 173 according to the rotational speed detected by the speed detection unit 171 to control rotation of the slide member guide 150.

The laundry processing machine generally exhibits a certain pattern of vibration, which is predictable to some extent, according to the rotational speed of the inner tub 24. For example, resonance is produced in the outer tub 22 in a specific range of rotational speed depending on the natural frequency of the outer tub 22. When such a range is defined as a resonant speed section, laundry distribution operation or maldistribution removing operation of rotating the inner tub 24 in a certain pattern is performed in a predetermined range of rotational speed away from the resonant speed section to distribute the laundry accommodated in the inner tub 24 or to remove maldistribution of the laundry in the inner tub 24. When distribution of the laundry in the inner tub 24 becomes uniform to a certain extent through such operation, the rotational speed of the inner tub 24 is increased to perform the drying operation. In this embodiment, the rotational positions of the slide member guide 150 are controlled, with reference to a preset speed (about 400 rpm) equal to or higher than the resonant speed. That is, in the range of rotational speed of the inner tub 24, which is lower than the preset speed, the slide member guide 150 is controlled to move to the first rotational position to damp the vibration. In the range of rotational speed of the inner tub 24 higher than the preset speed, the slide member guide 150 is controlled to move to the second rotational position to secure a movement section wide enough for the slide member guide 150 to move without interfering with the protrusion 142 (that is, the maximum distance that the protrusion 142 can move in the open-cut portion, at the second rotational position).

Particularly, the slide member guide 150 may selectively switch to the first rotational position or the second rotational position according to the rotational speed of the inner tub 24. In some embodiments, the slide member guide 150 may be controlled such that the slide member guide 150 has various rotational positions between the first rotational position and the second rotational position.

In addition, in controlling of the slide member guide 150 to move to the second rotational position in the section of steady state rotation of the inner tub 22, if the displacement of the slide member guide 150 according to the amount of vibration of the outer tub 22 is less than the distance between the first boundary 155a and the second boundary 155b, for example, the distance between P2 and P2' in FIG. 5B at the same rotational position, collision between the open-cut portion 155 and the protrusion 142 does not occur. Thereby, the slide member guide 150 can freely move without interfering with the protrusion 142 within a predetermined rotational displacement.

FIG. 10 is a cutaway view showing the cylinder 130. Referring to FIG. 10, the slide member guide 150 may be supported by contacting the inner circumferential surface of the cylinder 130. The cylinder 130 may include at least one support surface partially protruding from the inner circumferential surface of the cylinder 130. The support surface may include a first support surface 136a and a second support surface 136b, which respectively contact both longitudinal ends of the slide member guide 150. The outer circumferential surface of the slide member guide 150 does not entirely contact the inner circumferential surface of the cylinder 130, but partially contacts the inner circumferential surface of the cylinder 130 on the at least one support surface. Accordingly, friction may be reduced and switching between the rotational positions of the slide member guide 150 may be smoothly performed.

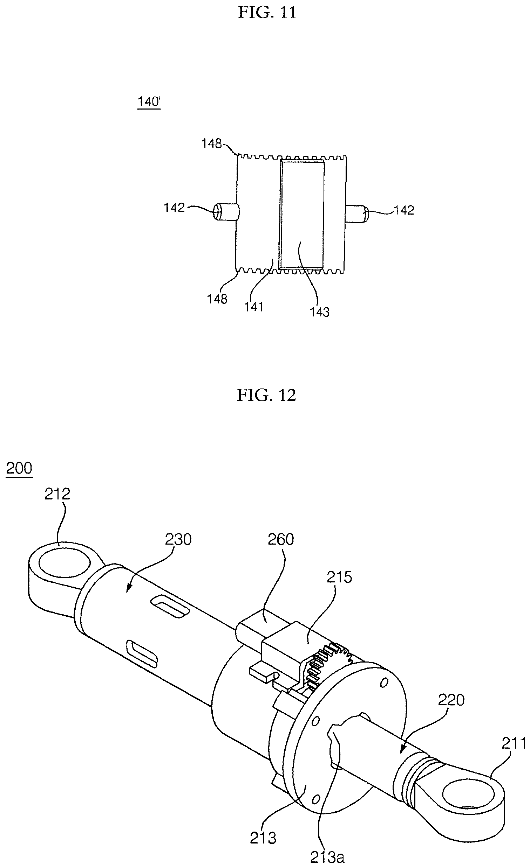

Meanwhile, a restriction surface 139 (see FIGS. 3 and 11) may be formed in the cylinder 130. While the protrusion of the slide member 140 moves in the protrusion insert path 157 of the slide member guide 150, it hits the upper end of the slide member 140. Thereby, the maximum allowable displacement of the slide member 140 is limited. Particularly, the restriction surface 139 contacts the longitudinal end of the slide member 140 before the protrusion 142 contacts the longitudinal end of the movement groove 135. Thereby, movement of the protrusion 142 may be restricted. Since the protrusion 142 does not collide with the longitudinal end of the movement groove 135, damage can be prevented.

FIG. 11 is a view showing another embodiment of the slide member. Referring to FIG. 11, depressions 148 may be formed at a portion of the upper end of the slide member 140' which collide with the restriction surface 139 formed on the cylinder 130. Compared to the case in which the upper end of the slide member 140' has an even surface, the surface with the depressions may reduce the area of the surface to collide with the restriction surface 139. Thereby, noise due to shock can be reduced.

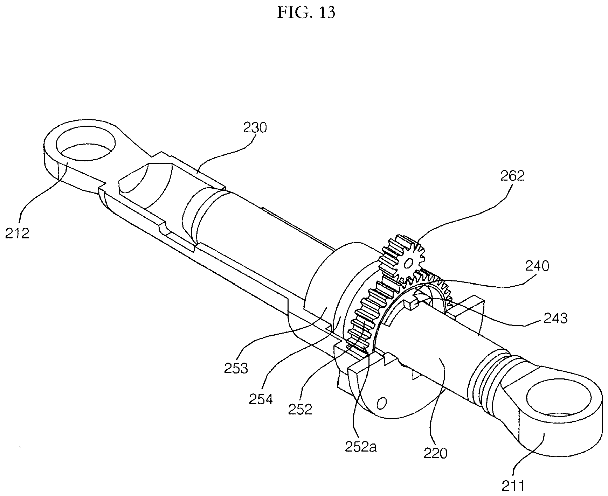

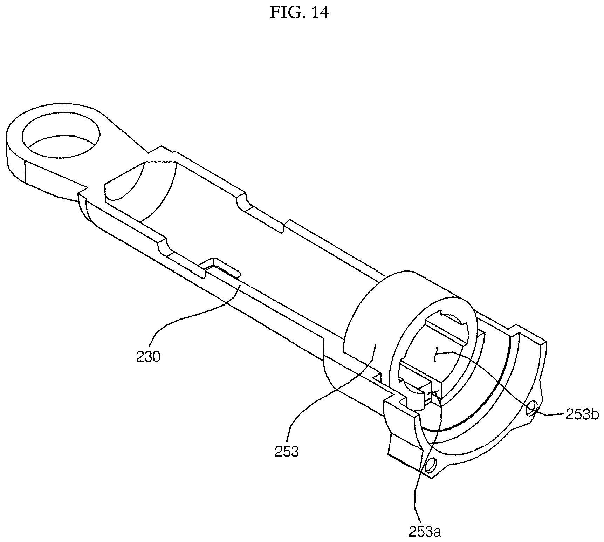

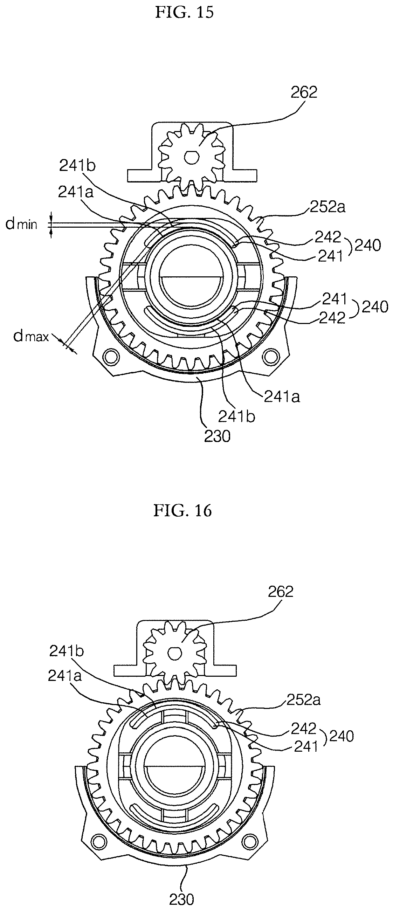

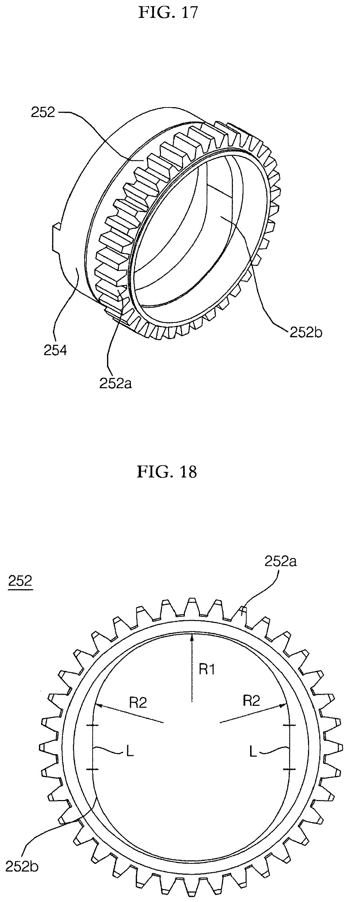

FIG. 12 is a perspective view showing a shock absorber according to an embodiment of the present invention. FIG. 13 is a cutaway view showing the shock absorber of FIG. 12. FIG. 14 shows a piston support disposed in the cylinder. FIG. 15 is a view illustrating operation of the shock absorber, which is at a first operational position. FIG. 16 is a view illustrating operation of the shock absorber, which is at a second operational position. FIG. 17 is a perspective view showing a holder operating member. FIG. 18 is a view showing a cam forming portion formed in the holder operating member.

Referring to FIGS. 12 to 18, the shock absorber 200 includes a cylinder 230, a piston 220, a friction member 241, friction member holders 242, and a holder operating member 252.

The piston 220 is connected to one of the casing 11 and the outer tub 22 to move according to vibration of the outer tub 22, and the cylinder 130 is connected to the other one of the casing 11 and the outer tub 22. When the outer tub 22 vibrates, the piston 220 and the cylinder 230 make relative movement with respect to each other. In this embodiment, the cylinder 230 is connected to the outer tub 22 and is moved according to vibration of the outer tub 22. On the other hand, the cylinder 220 is connected to the casing 11 and fixed. The shock absorber 100 may be provided with a piston connection portion 211 to connect the piston 220 to the casing 11, and a cylinder connection portion 212 to connect the cylinder 230 to the outer tub 22.

The friction member 241 is provided to allow friction to occur between the friction member 241 and the piston 220. Depending on the operating position of the holder operating member 252, which will be described later, the friction member holders 242 move to cause the friction member 241 to contact the piston 220 such that predetermined friction occurs between the friction member 241 and the piston 220.

The friction member 241 may be formed of a deformable material, which is deformed when external force is applied thereto, and returns to an original shape when the external force is removed. For example, the friction member 241 may be formed of rubber or felt. The friction member 241 may be disposed between the friction member holders 242 and the piston 220, or may be fixed to the inner lateral surfaces of the friction member holders 242 to integrally move together with the friction member holders 242.

When the holder operating member 252 is at the first operational position (see FIG. 15), the holder operating member 252 applies pressure to the friction member holders 242, causing the friction member 241 to contact the piston 220. When the holder operating member 252 is at the second operational position (see FIG. 6), it releases pressure applied to the friction member holders 242 to allow the friction member 241 to be separated from the piston 220. Herein, the pressure applied to the friction member holders 242 is defined as pressure to push the friction member holders 242 toward the piston 220. Depending on embodiments, the holder operating member 252 positioned at the second operational position may apply force to the friction member holder 242 in a direction opposite to the direction of force the holder operating member 252 applies when it is at the first operational position. However, even in this case, it will be understood that the holder operating member 252 releases pressure to push the friction member holder 242 toward the piston 220 when it is at the second operational position.

The holder operating member 252 is rotatably disposed in the cylinder 230, and the piston 220 is inserted into the holder operating member 252. Defined between the holder operating member 252 and the piston 220 is a predetermined space allowing the friction member holder 242 to move therein. The holder operating member 252 includes an annular cam forming portion 252b protruding from the inner circumferential surface facing the friction member holder 242 and extending along a circumferential direction.

Meanwhile, the shock absorber 200 may further include a shock absorption control motor 260. The shock absorption control motor 260 provides driving force to rotate the holder operating member 252. For example, the shock absorption control motor 173 may include a DC motor which produces a torque between about 300 g · cm and 2,500 g · cm. A fixing member 215 to fix the shock absorption control motor 260 to the cylinder 230 may further be provided.

The shock absorber 200 may include at least one gear to transfer driving force of the shock absorption control motor 260 to the holder operating member 252 to allow rotation of the holder operating member 252. The at least one gear may include a driving gear 262 rotated by the shock absorption control motor 260, and a driven gear 252a formed along the outer circumferential surface of the holder operating member 252 to rotate in response to rotation of the driving gear 262. The gear ratio between the driving gear 262 and the driven gear 252a may be 3:1. This means that the driven gear 252a completes one revolution per three revolutions of the driving gear 262. In this embodiment, the driving gear 262 rotates at the same rotational speed (rpm) as that of the shock absorption control motor 260, and the driven gear 252a rotates at the same rotational speed (rpm) as that of the holder operating member 252. Depending on embodiments, however, a power transmission means such as a gear may be provided between the driving gear 262 and the driven gear 252a.

Meanwhile, the shock absorber 200 may further include a piston support 253 fixed to an inner side of the cylinder 230 to support the piston 220 by causing the inner lateral surface of the piston support to surface contact the piston 220. A movement groove 253a may be formed along the inner lateral surface 253b of the piston support 253, which closely contacts the outer circumferential surface of the piston 220, in a radial direction. The friction member holder 242 may be provided with a protrusion 242c movably inserted into the movement groove 253a.

Meanwhile, one end of the cylinder 230 needs to be open wide enough to allow the friction member 241 and the friction member holder 242 to be easily inserted into the cylinder 230. A cylinder cap 213 may be coupled to the open end. An insert hole is formed at the center of the cylinder cap 213 to allow insertion of the piston 220.

FIG. 13 shows a protrusion 243c formed at a lower end of the friction member holder 242. In addition to the protrusion 243c, the upper end of the friction member holder 242 may also be provided with a protrusion (not shown). In this case, the protrusion formed at the upper end of the friction member holder 242 may be adapted to move in the movement groove 253a formed inside the piston support 253, while the protrusion 242c formed at the lower end of the friction member holder 242 may be adapted to move in a movement groove 213a formed in the cylinder cap 213.

The friction member holder 242 may be provided at symmetric positions in the cylinder 230. In this case, the cylinder support 253 and the cylinder cap 213 may be provided with a pair of movement grooves 253a and 213a.

Meanwhile, the holder operating member 252 and the piston support 253 may be formed of different materials. To reinforce the driven gear 252a, the holder operating member 252 may be formed of a metallic material. In the case that the piston support 253 is formed through injection molding of a synthetic resin, the shock absorption portion 254 formed of a synthetic material may be disposed between the holder operating member 252 and the piston support 253 such that the holder operating member 252 does not directly contact the piston support 253. The shock absorption portion 254 may integrally rotate with the holder operating member 252.

Referring to FIG. 18, a cam forming portion 252b includes a pressing section L to apply pressure to the friction member holder 242 when the holder operating member 252 is at the first operational position, and a spacing section D to maintain a predetermined distance from the cylinder 230 such that the friction member 241 can be separated from the cylinder 230, i.e., such that the friction member holder 242 can move along the movement grooves 253a and 213a when the holder operating member 252 is at the second operational position. The spacing section D may be formed as a circular arc with a predetermined radius of curvature R1, while the pressing section L may be formed as a straight line. A connection section C having a radius of curvature R2 greater than the radius of curvature R1 of the spacing section D may be formed between the pressing section L and the spacing section D.

Particularly, in the case that the pressing section L is formed as a straight line rather than as a circular arc, when the holder operating member 252 is controlled to move to the first operational position, relatively uniform pressure having similar magnitude to that of the pressure applied at the right position is applied to the friction member holder 242 even if the holder operating member 252 is not moved to cause the center of the pressing section L to coincide with the center of the friction member holder 242.

Referring to FIG. 15, when the holder operating member 252 is at the first operational position, the cam forming portion 252b applies pressure to cause the friction member 241 to closely contact the piston 220. Accordingly, as the friction member 241 is compressed, it closely contacts the piston 220. At this time, the minimum distance dmin between the center of the inner lateral surface of the friction member holder 242 and the piston 220 is formed. Preferably, the minimum distance is smaller than the thickness of the friction member 241 when external force is not applied. On the other hand, a maximum distance dmax is preferably formed between the edge of the inner lateral surface of the friction member holder 242 and the piston 220. To this end, in this embodiment, the radius of curvature of the inner lateral surface of the friction member holder 242 is larger than the radius of curvature of the outer circumferential surface of the piston 220. In this structure, when the pressing section L of the cam forming portion 252b moves onto the lateral end of the friction member holder 242 during movement of the holder operating member 252 to the first operational position, the lateral end of the friction member 241 can be prevented from being strongly pressed against the cylinder 230, even if pressure is not yet applied to the center of the friction member holder 242, i.e., even if the holder operating member 252 is not yet positioned at the first operational position.

Referring to FIG. 16, when the holder operating member 252 is controlled to move to the second operational position, the spacing section D is placed at the position corresponding to that of the friction member holder 242. At this time, a space allowing the friction member holder 242 separated from the piston 220 to move is secured between the spacing section D and the piston 220. When switching from the first operational position to the second operational position is performed, the friction member 241 compressed at the first operational position is elastically separated from the piston 220 by its own resilience. Even if the friction member 241 is not separated from the piston 220 but in contact with the piston 220, the friction member holder 242 is allowed to freely move along the movement grooves 253a and 213a at the second operational position, and accordingly the friction between the friction member 241 and the piston 220 is trivial.

In this embodiment, the operational position of the holder operating member 252 can be controlled according to the amount of vibration of the outer tub 22. Regarding control of vibration of an object exhibiting a periodic movement, it is widely known that vibrational energy of the object in a vibration range in which the amount of vibration is large needs to be absorbed by damping the vibration, and a degree of freedom of the object to maintain the steady state is preferably secured when the movement of the object reaches the steady state and the amount of vibration is within an allowed range. The first operational position is a position at which operation of the holder operating member 252 is controlled to damp the vibration of the outer tub 22 in the case that vibration of the outer tub 22 increases to a large extent. The vibration is damped by friction acting between the friction member 241 and the piston 220.

The second operational position is a position at which operation of the holder operating member 252 is controlled to allow the cylinder 230 to freely reciprocate without frictional action between the friction member 241 and the piston 220. At the second operational position, the cylinder 230 and the piston 220 relatively freely move with respect to each other. Therefore, the amount of vibration transferred to the casing 11 or the floor via the cylinder 230 or the piston 220 may be reduced. This is particularly effective in reducing noise when stability of the entire system is secured, as in the steady state, against vibration.

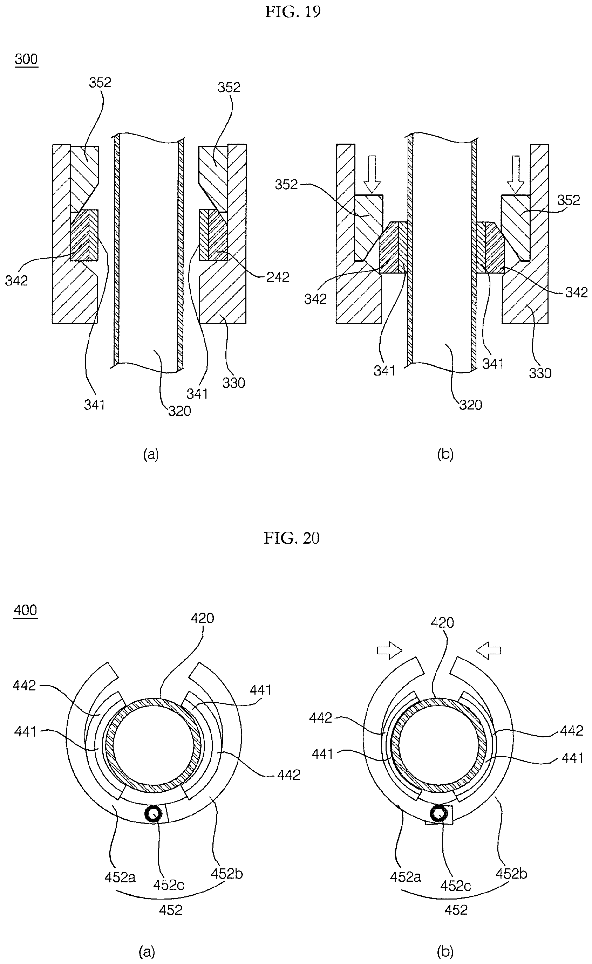

FIG. 19 is a view showing a shock absorber 300 according to another example, a holder operating member 352 of which is at the second operational position (FIG. 19(a)) or at the first operational position (FIG. 19(b)). Referring to FIG. 19, the holder operating member 352 of the shock absorber 300 moves between the first operational position (see FIG 19(b)) and the second operational position (see FIG. 19(a)) along the longitudinal direction of the cylinder 330. When the holder operating member 352 moves to the first operational position, a friction member holder 342 moves toward the piston 230. That is, the holder operating member 352 moves in a direction perpendicular to the movement of the friction member holder 342. Ends of the holder operating member 352 and the friction member holder 342 may be provided with inclined surfaces contacting each other. In this case, the direction of action of force is changed by the inclined surfaces. Meanwhile, in this embodiment, the shock absorber 300 may include a linear motor to cause the holder operating member 352 to rectilinearly move, as a shock absorption motor.

FIG. 20 is a view showing a shock absorber according to another example, a holder operating member of which is at the second operational position (FIG. 20(a) or at the first operational position (FIG. 20(b)). Referring to FIG. 20, the holder operating member 452 of the shock absorber 400 includes a pair of operating arms 452a and 452b pivotably disposed in the cylinder 330. Herein, the first operational position of the holder operating member 452 may be defined as a position at which the distance between the operating arms 452a and 452b is minimized, and the second operational position may defined as a position at which the distance between the operating arms 452a and 452b is maximized. The operating arms 452a and 452b may rotate about a hinge shaft 453c.

At the first operational position, the friction member holder 442 is pressed by the operating arms 452a and 452b. Thereby, the friction member 441 closely contacts the piston 420. At the second operational position, pressure applied to the friction member holder 442 is released, and thus the friction member 441 is separated from the piston 420.

Meanwhile, referring to FIG. 9, when the level of vibration of the outer tub 22 becomes equal to or higher than a certain level during rotation of the inner tub 24, the holder operating member 252, 352, 452 is moved to the first operational position such that vibration is absorbed by friction action between the friction member 241, 341, 441 and the piston 220, 320, 420. On the other hand, in the case that the level of vibration of the outer tub 22 is less than a certain level, the holder operating member 252, 352, 452 is controlled to moved to the second rotational position to allow the friction member 241, 341, 441 to relatively freely move. At this time, the operational positions of the holder operating member 252, 352, 452 may be switched though control of the shock absorption control motor 173 by the controller 172.

Depending on embodiments, a vibration sensing unit (not shown) to measure the amount of vibration of the outer tub 22 may be further provided. For example, the vibration sensing unit may be realized as an output sensor to sense change in output power of the driving unit 13 according to rotation of the inner tub 24, or as a displacement sensor to measure displacement of the outer tub 22 according to vibration. In addition, in some embodiments, a speed detection unit 171 to detect change in rotational speed of the inner tub 24 may be further provided. The controller 172 controls operation of the shock absorption control motor 173 according to the rotational speed detected by the speed detection unit 171 to control operational positions of the holder operating member 252, 352, 452.

The laundry processing machine generally exhibits a certain pattern of vibration, which is predictable to some extent, according to the rotational speed of the inner tub 24. For example, resonance is produced in the outer tub 22 in a specific range of rotational speed depending on the natural frequency of the outer tub 22. When such a range is defined as a resonant speed section, laundry distribution operation or maldistribution removing operation of rotating the inner tub 24 in a certain pattern is performed in a predetermined range of rotational speed away from the resonant speed section to distribute the laundry accommodated in the inner tub 24 or to remove maldistribution of the laundry in the inner tub 24. When distribution of the laundry in the inner tub 24 becomes uniform to a certain extent through such operation, the rotational speed of the inner tub 24 is increased to perform the drying operation. In this embodiment, the operational positions of the holder operating member 252, 352, 452 may be controlled, with reference to a preset speed (about 400 rpm) equal to or higher than the resonant speed. That is, in the range of rotational speed of the inner tub 24 which is lower than the preset speed, the holder operating member 252, 352, 452 is controlled to move to the first operational position to damp the vibration. In the range of rotational speed of the inner tub 24 higher than the preset speed, the holder operating member 252, 352, 452 may be controlled to move to the second operational position.

The laundry processing machine of the present invention is capable of performing proper shock absorption or vibration attenuation according to the characteristics of vibration of the outer tub. Therefore, the system can be stabilized in a shorter time.

In addition, the laundry processing machine of the present invention is capable of actively varying the capacity of shock absorption according to the characteristics of vibration of the outer tub. Therefore, the time taken prior to start of the drying operation can be reduced.

In addition, the laundry processing machine of the present invention can provide a larger capacity of shock absorption in the vibration section in which the outer tub greatly vibrates, thereby actively damping the vibration of the outer tub. Thereby, even if the space between the casing and the outer tub is narrow, collision between the outer tub and the casing can be prevented. Therefore, a larger volume of the outer tub can be secured for the inner space of the casing, which is limited to have a certain size.

In addition, the laundry processing machine of the present invention can reduce the amount of vibration transferred to the casing in the steady state, thereby reducing noised produced by the vibration.

## Claims

1. A laundry processing machine comprising:
a casing (11);
an outer tub (22) supported in the casing (11);
an inner tub (24) rotatably provided in the outer tub (11); and
a shock absorber (200, 300, 400) coupled, at one end thereof, to the casing (11) and coupled, at the other end thereof, to the outer tub (22) to absorb vibration of the outer tub (22) caused by rotation of the inner tub (24),
wherein the shock absorber (200, 300, 400) comprises:
a cylinder (230, 330) connected to one of the casing (11) and the outer tub (22);
a piston (220, 320, 420) connected to the other one of the casing (11) and the outer tub(22), wherein the cylinder (230, 330) and the piston (220, 320, 420) make relative movement with respect to each other according to the movement of the outer tub (22);
a friction member (241, 341, 441) provided to form friction with the piston (220, 320, 420);
a friction member holder (242, 342, 442) to integrally move together with the friction member (241, 341, 441); and
a holder operating member (252, 352, 452) to apply pressure to the friction member holder (242, 342, 442) to cause the friction member to contact the piston (220, 320, 420) when the holder operating member (252, 352, 452) is at a first operational position and to release the pressure applied to the friction member holder (242, 342, 442) to allow the friction member (241, 341, 441) to be separated from the piston (220, 320, 420) when the holder operating member (252, 352, 452) is at a second operational position,
**characterized in that** the holder operating member (252) comprises a cam forming portion (252b) protruding from an inner circumferential surface facing the friction member holder (242) and extending along a circumferential direction, and
the cam forming portion (252b) comprises:
a pressing section (L) to apply pressure to the friction member holder (242) to allow the friction member (241) to closely contact the piston (220), when the holder operating member (252) is at the first operational position; and
a spacing section (D) to form a gap between the spacing section (D) and the piston (220) to allow the friction member holder (242) separated from the piston (220) to move, when the holder operating member (252) is at the second operational position.

2. The laundry processing machine of claim 1, wherein a distance between the pressing section (L) and the piston (220) is shorter than a distance between the spacing section (D) and the piston (220).

3. The laundry processing machine of claim 1 or 2, wherein the pressing section (L) is formed as a straight line,
the spacing section (D) is formed to have a predetermined curvature radius (R), and
the cam forming portion (252b) further comprises a connection section (C) formed between the pressing section (L) and the spacing section (D) to have a larger curvature radius (R) than the spacing section (D).

4. The laundry processing machine of any one of claims 1 to 3, wherein a curvature radius of the inner lateral surface of the friction member holder (242) is larger than a curvature radius of the outer circumferential surface of the piston (220).

5. The laundry processing machine of any one of claims 1 to 4, wherein when the holder operating member (252) is at the first operational position, a distance between a center of the inner lateral surface of the friction member holder (242) and the piston (220) is shorter than a thickness the friction member (241) has when external force compressing the friction member (241) is not applied thereto.

6. The laundry processing machine of any one of claims 1 to 5, wherein when the holder operating member (252) is at the first operational position, a distance from a side end of the inner lateral surface of the friction member holder (242) to the piston (220) is longer than a distance from a center of the inner lateral surface of the friction member holder (242) to the piston (220).

7. The laundry processing machine of any one of claims 1 to 6, wherein the friction member holder (242) comprises:
a protrusion;
a piston support (253) fixed to an inner side of the cylinder (230) to support the piston (220) through a surface contact between an inner lateral surface of the piston support (253) and the piston (220); and
a movement groove (235a) formed along the inner lateral surface of the piston support (253);
wherein the protrusion is movably inserted into the movement groove (253a).

8. The laundry processing machine of any one of claims 1 to 3, further comprising:
a shock absorption control motor (260) to provide a driving force to rotate the holder operating member (252).

9. The laundry processing machine of claim 8, further comprising:
at least one gear (262, 252a) to transfer the driving force of the shock absorption control motor (260) such that the holder operating member (252) is rotated.

10. The laundry processing machine of claim 9, wherein the at least one gear (262, 252a) comprises:
a driving gear (262) rotated by the shock absorption control motor (260); and
a driven gear (252a) formed along an outer circumferential surface of the holder operating member (252) to rotate in response to rotation of the driving gear (262),
wherein a gear ratio between the driving gear (262) and the driven gear (252a) is 3:1.

## Patentansprüche

1. Wäschebehandlungsmaschine mit:
einem Gehäuse (11);
einem in dem Gehäuse (11) gelagerten äußeren Bottich (22);
einem in dem äußeren Bottich (22) drehbar bereitgestellten inneren Bottich (24); und
einem Stoßdämpfer (200, 300, 400), der an seinem einen Ende mit dem Gehäuse (11) und an seinem anderen Ende mit dem äußeren Bottich (22) verbunden ist, um die durch Rotation des inneren Bottichs (24) verursachte Vibration des äußeren Bottichs (22) zu dämpfen,
wobei der Stoßdämpfer (200, 300, 400) aufweist:
einen Zylinder (230, 330), der mit dem einen von Gehäuse (11) und äußeren Bottich (22) verbunden ist; und
einen Kolben (220, 320, 420), der mit dem anderen von Gehäuse (11) und äußeren Bottich (22) verbunden ist, wobei der Zylinder (230, 330) und der Kolben (220, 320, 420) sich gemäß der Bewegung des äußeren Bottichs (22) relativ zueinander bewegen;
ein Reibungselement (241, 341, 441), das vorgesehen ist, eine Reibung mit dem Kolben (220, 320, 420) zu bilden;
eine Reibungselement-Halterung (242, 342, 442), um sich zusammen mit dem Reibungselement (241, 341, 441) integral zu bewegen; und
ein Halterung-Betätigungselement (252, 352, 452), um Druck auf die Reibungselement-Halterung (242, 342, 442) anzulegen, um einen Kontakt des Reibungselements mit dem Kolben (220, 320, 420) zu bewirken, wenn das Halterung-Betätigungselement (252, 352, 452) in einer ersten Betätigungsposition ist, und um den an die Reibungselement-Halterung (242, 342, 442) angelegten Druck zu lösen, um ein Trennen des Reibungselements (241, 341, 441) von dem Kolben (220, 320, 420) zu erlauben, wenn das Halterung-Betätigungselement (252, 352, 452) in einer zweiten Betätigungsposition ist,
**dadurch gekennzeichnet, dass**
das Halterung-Betätigungselement (252) einen nockenbildenden Abschnitt (252b) aufweist, der von einer der Reibungselement-Halterung (242) zugewandten Innenumfangsfläche vorspringt und sich entlang einer Umfangsrichtung erstreckt, und
der nockenbildende Abschnitt (252b) aufweist:
einen drückenden Abschnitt (L), um Druck an die Reibungselement-Halterung (242) anzulegen, um einen engen Kontakt des Reibungselements (241) mit dem Kolben (220) zu erlauben, wenn das Halterung-Betätigungselement (252) in der ersten Betätigungsposition ist; und
einen beabstandenden Abschnitt (D), um einen Spalt zwischen dem beabstandenden Abschnitt (D) und dem Kolben (220) zu bilden, um der von dem Kolben (220) getrennten Reibungselement-Halterung (242) zu erlauben, sich zu bewegen, wenn das Halterung-Betätigungselement (252) in der zweiten Betätigungsposition ist.

2. Wäschebehandlungsmaschine nach Anspruch 1, wobei eine Distanz zwischen dem drückenden Abschnitt (L) und dem Kolben (220) kürzer ist als eine Distanz zwischen dem beabstandenden Abschnitt (D) und dem Kolben (220).

3. Wäschebehandlungsmaschine nach Anspruch 1 oder 2, wobei
der drückende Abschnitt (L) als eine gerade Linie gebildet ist,
der beabstandende Abschnitt (D) gebildet ist, um einen vorgegebenen Krümmungsradius (R) zu haben, und
der nockenbildende Abschnitt (252b) ferner einen zwischen dem drückenden Abschnitt (L) und dem beabstandenden Abschnitt (D) gebildeten Verbindungsabschnitt (C) aufweist, um einen größeren Krümmungsradius (R) als der beabstandende Abschnitt (D) zu haben.

4. Wäschebehandlungsmaschine nach einem der Ansprüche 1 bis 3, wobei ein Krümmungsradius der Innenseitenfläche der Reibungselement-Halterung (242) größer ist als ein Krümmungsradius der Außenumfangsfläche des Kolbens (220).

5. Wäschebehandlungsmaschine nach einem der Ansprüche 1 bis 4, wobei, wenn das Halterung-Betätigungselement (252) in der ersten Betätigungsposition ist, eine Distanz zwischen einer Mitte der Innenseitenfläche der Reibungselement-Halterung (242) und dem Kolben (220) kürzer ist als eine Dicke, die das Reibungselement (241) hat, wenn eine das Reibungselement (241) zusammendrückende äußere Kraft nicht an ihm anliegt.

6. Wäschebehandlungsmaschine nach einem der Ansprüche 1 bis 5, wobei, wenn das Halterung-Betätigungselement (252) in der ersten Betätigungsposition ist, eine Distanz von einem Seitenende der Innenseitenfläche der Reibungselement-Halterung (242) zu dem Kolben (220) länger ist als eine Distanz von einer Mitte der Innenseitenfläche der Reibungselement-Halterung (242) zu dem Kolben (220).

7. Wäschebehandlungsmaschine nach einem der Ansprüche 1 bis 6, wobei die Reibungselement-Halterung (242) aufweist:
einen Vorsprung;
ein an einer Innenseite des Zylinders (230) angebrachtes Kolbenlager (253) zur Lagerung des Kolbens (220) mittels eines Oberflächenkontakts zwischen einer Innenseitenfläche des Kolbenlagers (253) und dem Kolben (220); und
eine entlang der Innenseitenfläche des Kolbenlagers (253) gebildete Bewegungsrille (235a);
wobei der Vorsprung bewegbar in der Bewegungsrille (253a) eingesetzt ist.

8. Wäschebehandlungsmaschine nach einem der Ansprüche 1 bis 3, ferner aufweisend:
einen Stoßdämpfungssteuermotor (260), um eine Antriebskraft zum Rotieren des Halterung-Betätigungselements (252) bereitzustellen.

9. Wäschebehandlungsmaschine nach Anspruch 8, ferner aufweisend:
mindestens ein Zahnrad (262, 252a), um die Antriebskraft des Stoßdämpfungssteuermotors (260) zu übertragen, so dass das Halterung-Betätigungselement (252) rotiert wird.

10. Wäschebehandlungsmaschine nach Anspruch 9, wobei das mindestens eine Zahnrad (262, 252a) aufweist:
ein von dem Stoßdämpfungssteuermotor (260) rotiertes antreibendes Zahnrad (262); und
ein angetriebenes Zahnrad (252a), das entlang einer Außenumfangsfläche des Halterung-Betätigungselements (252) gebildet ist, um als Antwort auf Rotation des antreibenden Zahnrads (262) zu rotieren,
wobei ein Übersetzungsverhältnis zwischen dem antreibenden Zahnrad (262) und dem angetriebenen Zahnrad (252a) 3:1 ist.

## Revendications

1. Machine de traitement du linge comprenant :
une carcasse (11) ;
une cuve externe (22) supportée dans la carcasse (11) ;
une cuve interne (24) prévue pour pouvoir tourner dans la cuve externe (22) ; et
un amortisseur (200, 300, 400) couplé, au niveau de son extrémité, à la carcasse (11) et couplé, au niveau de son autre extrémité, à la cuve externe (22) pour absorber des vibrations de la cuve externe (22), provoquées par la rotation de la cuve interne (24),
dans laquelle l'amortisseur (200, 300, 400) comprend :
un cylindre (230, 330) raccordé à l'une parmi la carcasse (11) et la cuve externe (22) ;
un piston (220, 320, 420) raccordé à l'autre parmi la carcasse (11) et la cuve externe (22), dans laquelle le cylindre (230, 330) et le piston (220, 320, 420) font un déplacement relatif l'un par rapport à l'autre selon le déplacement de la cuve externe (22) ;
un élément de friction (241, 341, 441) prévu pour produire de la friction avec le piston (220, 320, 420) ;
un support d'élément de friction (242, 342, 442) pour se déplacer de manière solidaire conjointement avec l'élément de friction (241, 341, 441) ; et
un élément d'actionnement de support (252, 352, 452) pour appliquer de la pression sur le support d'élément de friction (242, 342, 442) afin d'amener l'élément de friction à être en contact avec le piston (220, 320, 420) lorsque l'élément d'actionnement de support (252, 352, 452) est dans une première position opérationnelle et pour libérer la pression appliquée sur le support d'élément de friction (242, 342, 442) pour permettre à l'élément de friction (241, 341, 441) d'être séparé du piston (220, 320, 420) lorsque l'élément d'actionnement de support (252, 352, 452) est dans une seconde position opérationnelle,
**caractérisée en ce que** l'élément d'actionnement de support (252) comprend une partie formant came (252b) faisant saillie à partir d'une surface circonférentielle interne faisant face au support d'élément de friction (242) et s'étendant le long d'une direction circonférentielle, et
la partie formant came (252b) comprend :
une section de pression (L) pour appliquer de la pression sur le support d'élément de friction (242) pour permettre à l'élément de friction (241) d'être étroitement en contact avec le piston (220), lorsque l'élément d'actionnement de support (252) est dans la première position opérationnelle ; et
une section d'espacement (D) pour former un espace entre la section d'espacement (D) et le piston (220) pour permettre au support d'élément de friction (242) séparé du piston (220) de se déplacer, lorsque l'élément d'actionnement de support (252) est dans la seconde position opérationnelle.

2. Machine de traitement du linge selon la revendication 1, dans laquelle une distance entre la section de pression (L) et le piston (220) est plus courte qu'une distance entre la section d'espacement (D) et le piston (220).

3. Machine de traitement du linge selon la revendication 1 ou 2, dans laquelle la section de pression (L) est formée comme une ligne droite,
la section d'espacement (D) est formée pour avoir un rayon de courbure (R) prédéterminé, et
la partie formant came (252b) comprend en outre une section de raccordement (C) formée entre la section de pression (L) et la section d'espacement (D) pour avoir un rayon de courbure (R) plus grand que la section d'espacement (D).

4. Machine de traitement du linge selon l'une quelconque des revendications 1 à 3, dans laquelle un rayon de courbure de la surface latérale interne du support d'élément de friction (242) est supérieur à un rayon de courbure de la surface circonférentielle externe du piston (220).

5. Machine de traitement du linge selon l'une quelconque des revendications 1 à 4, dans laquelle lorsque l'élément d'actionnement de support (252) est dans la première position opérationnelle, une distance entre un centre de la surface latérale interne du support d'élément de friction (242) et le piston (220) est plus courte qu'une épaisseur que l'élément de friction (241) a, lorsque la force externe comprimant l'élément de friction (241) n'y est pas appliquée.

6. Machine de traitement du linge selon l'une quelconque des revendications 1 à 5, dans laquelle lorsque l'élément d'actionnement de support (252) est dans la première position opérationnelle, une distance allant d'une extrémité latérale de la surface latérale interne du support d'élément de friction (242) au piston (220) est plus longue qu'une distance allant d'un centre de la surface latérale interne du support d'élément de friction (242) au piston (220).

7. Machine de traitement du linge selon l'une quelconque des revendications 1 à 6, dans laquelle le support d'élément de friction (242) comprend :
une saillie ;
un support de piston (253) fixé à un côté interne du cylindre (230) pour supporter le piston (220) par le biais d'un contact de surface entre une surface latérale interne du support de piston (253) et le piston (220) ; et
une rainure de déplacement (235a) formée le long de la surface latérale interne du support de piston (253) ;
dans laquelle la saillie est insérée de manière mobile dans la rainure de déplacement (253a).

8. Machine de traitement du linge selon l'une quelconque des revendications 1 à 3, comprenant en outre :
un moteur de contrôle d'amortissement (260) pour fournir une force d'entraînement afin de faire tourner l'élément d'actionnement de support (252).

9. Machine de traitement du linge selon la revendication 8, comprenant en outre :
au moins un engrenage (262, 252a) pour transférer la force d'entraînement du moteur de contrôle d'amortissement (260) de sorte que l'élément d'actionnement de support (252) tourne.

10. Machine de traitement du linge selon la revendication 9, dans laquelle l'au moins un engrenage (262, 252a) comprend :
un engrenage d'entraînement (262) entraîné en rotation par le moteur de contrôle d'amortissement (260) ; et
un engrenage entraîné (252a) formé le long d'une surface circonférentielle externe de l'élément d'actionnement de support (252) pour tourner en réponse à la rotation de l'engrenage d'entraînement (262),
dans lequel un rapport d'engrenage entre l'engrenage d'entraînement (262) et l'engrenage entraîné (252a) est de 3 : 1.
